# EUROPÄISCHE PATENTSCHRIFT

(11) **EP 3 752 816 B1**
(45) Veröffentlichungstag und Bekanntmachung des Hinweises auf die Patenterteilung: **09.08.2023**
(21) Anmeldenummer: 20705299.4
(22) Anmeldetag: 04.02.2020
(51) Int. Cl.: G01N 21/03, G01N 21/64

(54) **VORRICHTUNG FÜR EINE LICHTSPEKTROSKOPISCHE ANALYSE**
DEVICE FOR A LIGHT-SPECTROSCOPIC ANALYSIS
DISPOSITIF POUR ANALYSE SPECTROSCOPIQUE

(30) Priorität: 05.02.2019 DE 102019201440
(43) Veröffentlichungstag der Anmeldung: 23.12.2020
(73) Patentinhaber: Implen GmbH, 81829 München (DE)
(72) Erfinder: SAHIRI, Thomas, Calabasas, California 91302 (US); KAPFINGER, Stephan, 86161 Augsburg (DE)
(74) Vertreter: Hoffmann Eitle
(86) Internationale Anmeldenummer: PCT/EP2020/052689
(87) Internationale Veröffentlichungsnummer: WO 2020/161108

(56) Entgegenhaltungen:
- EP-A2- 0 266 881
- DE-A1-102005 036 898
- DE-B3- 10 351 160
- DE-B3-102013 224 847
- TW-A- 201 433 785

## Beschreibung

### Technisches Gebiet

Die vorliegende Erfindung betrifft eine Vorrichtung für eine lichtspektroskopische Analyse einer Probe, wobei es sich bspw. um eine flüssige Probe handelt. Mittels einer solchen Vorrichtung kann die genannte Probe photometrisch, spektralphotometrisch, fluorometrisch, spektralfluorometrisch und/oder mithilfe von Phosphoreszenz oder Lumineszenz detektiert und/oder analysiert werden.

### Stand der Technik

Im Stand der Technik sind Vorrichtungen für eine lichtspektroskopische Analyse bekannt. Bei einem Spektrometer treten an Grenzflächen transmittierender Bauteile, die sich im Strahlengang befinden, Reflexionen auf. Solche Bauteile sind beispielsweise der Filter, die Detektorlinse und das Sensorfenster.

Dabei entsteht die Problematik, dass Lichtstrahlen, die mehrfach zwischen den im Strahlengang befindlichen Bauteilen reflektiert werden, erneut in Richtung des Detektors gelenkt werden. Da im Allgemeinen der Lichteinfall nicht senkrecht zu den genannten Elementen ist, treffen die Reflexionen auf Bereiche des Sensors, die an anderen Positionen liegen, als das eigentliche Signal. Ebenfalls entsteht die Problematik, dass Lichtstrahlen des Anregungslichtes, die an den im Strahlengang befindlichen Bauteilen reflektiert werden, jedoch nicht zur Probe gelangen, in Richtung des Detektors gelenkt werden. Diese Phänomene werden auch als "Ghost Image" bezeichnet.

Besonders kritisch für die Entstehung von Streulicht sind optische Elemente zwischen der Anregung/Detektion und der Probe. An jedem Übergang (Grenzfläche) wird ein Teil des Anregungslichtes reflektiert und kann zur Detektionsfaser gelangen. Ebenso wird Licht an einem Fenster der Probenkammer reflektiert, auf das die flüssige Probe aufgebracht wird.

Es ist somit im Allgemeinen vorteilhaft, die Zahl der optischen Bauteile auf ein Minimum zu beschränken, um auf diese Weise die Anzahl möglicher Reflexionsflächen zu verringern. Eine Möglichkeit hierfür ist, eine Linse, die das Licht aus der Anregungsfaser bündelt oder in die Detektionsfaser fokussiert, auch als Fenster der Probenkammer zu verwenden. Dieser Aufbau hat allerdings den Nachteil, dass ein Messkopf, der die Anregungs- und Detektionsfaser sowie die fokussierende Linse umfasst, starr mit der Probenkammer verbunden sein muss.

Die DE 10 2005 036 898 A1 beschreibt eine Vorrichtung für die Analyse oder Absorptionsmessung an einer kleinen Flüssigkeitsmenge, wobei die Vorrichtung eine obere flächige Aufnahmestelle zum Aufbringen oder Auftropfen des Mediums aufweist.

Ferner ist die DE 103 51 160 B3 bekannt, die eine Durchfluss-Meßküvette zur transmissionsspektroskopischen Untersuchung biologischer Flüssigkeiten im mittleren infraroten Spektralbereich (MIR) betrifft, umfassend eine Kammer zur Aufnahme der zu untersuchenden Flüssigkeit, welche einen Strömungskanal zwischen einem Flüssigkeitseinlass und einem Flüssigkeitsauslass zur Verfügung stellt.

Weitere Dokumente sind die TW 201433785 A, EP 0 266 881 A2 sowie DE 10 2013 22 847 B3.

### Gegenstand der Erfindung

Die Erfindung zielt darauf ab, eine kompakt ausgestaltete Vorrichtung bereitzustellen, die die zuvor genannte Problematik zumindest teilweise behebt und somit ein hochwertigeres Messergebnis bei flexibler Einsatzmöglichkeit ermöglicht.

Der Gegenstand des Anspruchs 1 stellt eine entsprechende Vorrichtung bereit. Weitere bevorzugte Ausführungsformen sind in den abhängigen Ansprüchen aufgeführt.

Die Erfindung zielt darauf ab, den Messkopf von der Probenauflage zu trennen, dabei jedoch zusätzliches reflexionsbedingtes Streulicht zu vermeiden. Dies wird durch eine Vorrichtung für eine lichtspektroskopische Analyse gemäß Anspruch 1 erreicht. Bevorzugte Ausführungsformen sind in den Unteransprüchen definiert.

Es wird eine Vorrichtung für eine lichtspektroskopische Analyse bereitgestellt, wie in Anspruch 1 definiert. Die Vorrichtung zeichnet sich dadurch aus, dass die Probenaufnahme eine zum Messkopf weisende Fläche aufweist, die der Probenaufnahmefläche gegenüberliegt und deren Normale mit einer optischen Achse des Messkopfes einen ersten Winkel α bildet (α>0°). Dieser Winkel kann bevorzugt 2° bis 75°, weiter bevorzugt 4° bis 10° und besonders bevorzugt im Wesentlichen 6° betragen.

Aufgrund der gezielten Neigung der Normalen der zum Messkopf weisenden Fläche der Probenaufnahme zur optischen Achse des Messkopfs, also einer gezielten Abweichung von der bekannten "parallelen" Ausrichtung der optischen Grenzflächen, wird es möglich, den optischen Pfad des Streulichts, das heißt desjenigen Anteils des Anregungslichts, der ohne Interaktion mit der Probe an den optischen Flächen gestreut bzw. reflektiert wird, vom optischen Pfad des Signallichts, das heißt desjenigen Anteils des Anregungslichts, der mit der Probe interagiert hat, so weit zu trennen, dass das Verhältnis von detektiertem Streulicht zu detektiertem Signallicht effektiv verringert wird, oder anders ausgedrückt weniger Streulicht auf den Detektor fällt.

Der Messkopf kann bevorzugt eine Linse aufweisen, zum Beispiel eine plano-konvexe Linse. Da die Linsenfläche des Messkopfes nicht als Probenauflage dienen muss, kann der Messkopf inklusive der Linsenfläche so orientiert werden, dass die gekrümmte Fläche der Linse zur Probenaufnahme weist. In diesem Fall trifft das aus der Anregungsfaser austretende Anregungslicht auf die plane Seite der Linse als Eintrittsfläche. Dies unterdrückt das Streulicht an der planen Seite der Linse, wenn der Abstand von der Linse zu den Anregungs-/Detektionspupillen (z.B. den Faserenden) so gering gewählt wird, dass die Reflexion des aus der Anregungspupille austretenden Anregungslichtes an der planen Seite der Linse zwischen die Pupillen fällt, also nicht in die Detektionspupille gelangt. Dies wäre im Fall, dass die konvexe Seite der Linse zu den Pupillen (Faserenden) zeigt, nicht möglich, da dann die Brennweite der Linse den Abstand festlegt.

Im Ergebnis verbleiben, obwohl eine potentielle Reflexionsfläche an der Aufnahme für die Probe hinzugekommen ist, nur zwei streulichtrelevante Grenzflächen zwischen den Anregungs-/Detektionspupillen (bzw. den entsprechenden Faserenden) und Probe. Durch die erfindungsgemäße Neigung der Normale der zum Messkopf weisenden und der Probenaufnahmefläche gegenüberliegenden Fläche in Bezug auf die optische Achse des Messkopfes um den Winkel α wird die Reflexion an der dem Messkopf zugewandten Seite der Probenaufnahme so abgelenkt, dass das an dieser Fläche entstehende Streulicht nicht in den Detektionslichtpfad gelangt.

Erfindungsgemäß ist es vorgesehen, dass für die Aufnahme einer Probe statt einer herkömmlichen planparallelen Probenaufnahme (z.B. eines planaren Fensters einer Probenkammer), wie sie im Stand der Technik verwendet wird, eine Probenaufnahme eingesetzt wird, deren der Probenaufnahmefläche gegenüberliegende, zum Messkopf weisende Fläche mit der Probenaufnahmefläche einen zweiten Winkel β bildet (β>0°). Dabei ist die Probenaufnahme im Querschnitt keilförmig ausgestaltet. Die Reflexion an der dem Messkopf zugewandten Seite der Probenaufnahme wird erfindungsgemäß aufgrund des zuvor genannten Winkels abgelenkt, so dass das an dieser Fläche entstehende Streulicht nicht in die Detektionsfaser gelangt, wobei die Probenaufnahme aufgrund ihrer Keilform aber weiterhin so eingebaut werden kann, dass die Probeaufnahmefläche horizontal ausgerichtet bleibt und so die Probe (beispielsweise ein Flüssigkeitstropfen) problemlos auf der Aufnahme gehalten werden kann.

Gemäß einer bevorzugten Ausführungsform umfasst die Vorrichtung einen Spiegel, der einen definierten Abstand von der Probenaufnahmefläche aufweist und an dem ein durch die Probenaufnahme gelangtes Licht reflektiert wird. Durch das Reflektieren des Anregungslichts tritt dieses zweimal durch die Probe und verdoppelt so das gewünschte Signallicht. Darüber hinaus wird die Probe zwischen dem Spiegel und der Probenaufnahmefläche sicher gehalten. Auch kann die Vorrichtung kompakt ausgeführt werden, da Anregungslicht und Signallicht auf derselben Seite der Probenaufnahme zu- bzw. abgeführt werden.

In einer weiteren Ausführung kann dieser Spiegel, im Querschnitt betrachtet, keilförmig ausgebildet sein. Hierbei ist es dann zweckmäßig, dass die der Probenaufnahme zugewandte Fläche des Spiegels parallel zur Probenaufnahmefläche ist.

Da die erfindungsgemäße Aufnahme (insbesondere wenn sie als Prisma ausgestaltet ist) nicht nur die Reflexion ablenkt, sondern auch das transmittierte Signallicht umlenkt, kann auch der Messkopf gegenüber dem Spiegel geneigt werden, und zwar um einen Winkel, der die Umlenkung des Strahls kompensiert. Dadurch wird gewährleistet, dass die Transmission des Signals, d.h. die Kopplung des Signals in die Detektionsfaser, nicht durch das Prisma beeinträchtigt wird.

Es ist bevorzugt, dass der Winkel β, um den die der Probenaufnahmefläche gegenüberliegende, zum Messkopf weisende Fläche gegenüber der Probenaufnahmefläche geneigt ist, im Bereich von 2° bis 45°, bevorzugt im Bereich von 3° bis 7°, besonders bevorzugt im Wesentlichen 5° beträgt. Dieser Winkel(bereich) kann auch als Keilwinkel bezeichnet werden. Der Winkelbereich hat sich bei der Vermeidung oder Verringerung der Detektion von Streulicht als besonders vorteilhaft erwiesen.

In einer weiteren Ausführungsform ist es vorgesehen, dass die optische Achse des Messkopfs mit einer Normalen der Aufnahmefläche der Probenaufnahme einen dritten Winkel γ im Bereich von 1° bis 30°, bevorzugt 1° bis 3°, und besonders bevorzugt im Wesentlichen 1°, bildet. Auch durch diese Maßnahme wird die Detektion von Streulicht deutlich reduziert und somit die Qualität des Erfassungsergebnisses deutlich gesteigert.

Dabei kann eine Differenz aus einem vierten Winkel 5 der Normalen des Spiegels und eines dritten Winkels γ der optischen Achse des Messkopfes, jeweils relativ zu einer Normalen der Aufnahmefläche gemessen, im Bereich von 2° bis 30°, bevorzugt 2° bis 4° liegen, und besonders bevorzugt im Wesentlichen 2° betragen. Dieser Winkelbereich hat sich als besonders vorteilhaft erwiesen, um eine negative Beeinflussung des Messergebnisses durch Streulicht zu vermeiden.

Der Messkopf kann, in vertikaler Richtung betrachtet, unterhalb der Aufnahme angeordnet sein, so dass eine (flüssige) Probe auf eine Probenaufnahmen sicher aufgebracht und nachfolgend analysiert werden kann.

Am Messkopf können eine Anregungsfaser und eine Detektionsfaser angekoppelt sein, wobei durch die Anregungsfaser Anregungslicht zugeführt wird, das nach Bestrahlen der Probenaufnahme zur Detektionsfaser gelangt. Dies ermöglicht eine kompakte Ausgestaltung der Vorrichtung.

In einer bevorzugten Ausführungsform ist der Messkopf in einer Ebene parallel zur Probenaufnahmefläche verfahrbar. Auch ist der Messkopf bevorzugt entlang seiner optischen Achse, beispielsweise zur Fokussierung, verstellbar. Auf diese Weise ist es möglich, auf der Probenaufnahme auch mehrere Proben aufzubringen, die durch Verfahren des Messkopfes detektiert und analysiert werden können.

Es ist bevorzugt, dass die Vorrichtung ein Spektrometer, insbesondere ein Fluoreszenz-Spektrometer oder ein Lumineszenz-Spektrometer, umfasst. Somit wird eine hochwertige Analyse einer Probe gewährleistet.

In einer weiteren Ausführungsform sind mehrere Probenaufnahmen mit einer Probenaufnahmefläche zur Aufnahme einer, insbesondere flüssigen, Probe sowie ein oder mehrere bewegliche Messköpfe zur Ausgabe von Anregungslicht in Richtung der Probe und Aufnahme von Signallicht von der Probe vorgesehen. Der Messkopf bzw. die Messköpfe ist bzw. sind dabei bevorzugt in einer Ebene parallel zur Probenaufnahmefläche verfahrbar. Durch diesen Aufbau können mehrere Proben mittels eines Messkopfs detektiert und entsprechend analysiert werden, bei mehreren Messköpfen aber auch gleichzeitig mehrere Proben gleichzeitig, so dass die Produktivität gesteigert werden kann. Der Messkopf bzw. die Messköpfe ist bzw. sind bevorzugt entlang ihrer optischen Achse verstellbar, beispielsweise zur Fokussierung.

Die Vorrichtung kann eine Lichtquelle zum Bereitstellen des Anregungslichts für den Messkopf umfassen, wobei bevorzugt ist, dass die Lichtquelle eine Xenon-Lampe, insbesondere eine Xenon-Blitzlichtlampe, aufweist. Somit wird eine qualitativ äußerst hochwertige Analyse gewährleistet.

Ferner betrifft die Erfindung wie in Anspruch 13 definiert eine Verwendung einer Vorrichtung gemäß einem der vorangegangenen Ansprüche zur lichtspektroskopischen Analyse von einer oder mehreren, insbesondere flüssigen, Proben, die an der Probenaufnahme oder mehreren Probenaufnahmen vorgesehen ist/sind.

Im Rahmen der Verwendung kann eine flüssige Probe an der Probenaufnahme aufgebracht und mit dem Messkopf detektiert werden. Das hieraus ermittelte Signallicht kann beispielsweise mit einem Spektrometer weiter analysiert und bewertet werden.

### Kurze Beschreibung der Zeichnungen

- Fig. 1: zeigt eine schematische Ansicht eines Messkopfes einer Vorrichtung für eine lichtspektroskopische Analyse gemäß einer ersten Ausführungsform der Erfindung.
- Fig. 2: zeigt eine schematische Ansicht eines Messkopfes einer Vorrichtung für eine lichtspektroskopische Analyse gemäß einer zweiten Ausführungsform der Erfindung.
- Fig. 3: zeigt eine schematische Ansicht eines Messkopfes einer Vorrichtung für eine lichtspektroskopische Analyse gemäß einer dritten Ausführungsform der Erfindung.
- Fig. 4: zeigt eine schematische Ansicht eines Messkopfes einer Vorrichtung für eine lichtspektroskopische Analys, die nicht unter den Umfang der Ansprüche fällt.
- Fig. 5: zeigt einen Strahlengang eines von einem Messkopf eingeführten Lichts gemäß der zweiten Ausführungsform der Erfindung.
- Fig. 6: zeigt Untersuchungen zur Evaluierung von Streulicht in unterschiedlichen Bereichen des Strahlengangs bei einer Vorrichtung gemäß der zweiten Ausführungsform der Erfindung.
- Fig. 7: zeigt Untersuchungen zur Evaluierung von Streulicht in unterschiedlichen Bereichen des Strahlengangs bei einer konventionell ausgebildeten Vorrichtung.

### Detaillierte Beschreibung der bevorzugten Ausführungsformen

Nachfolgend werden anhand der beigefügten Figuren bevorzugte Ausführungsformen beschrieben sowie anhand von Messergebnissen die Vorteile der Erfindung im Detail erläutert. Obwohl die Ausführungsformen als beispielhaft, und nicht einschränkend, zu verstehen sind, können Einzelmerkmale auch zur Spezifizierung der Erfindung herangezogen werden.

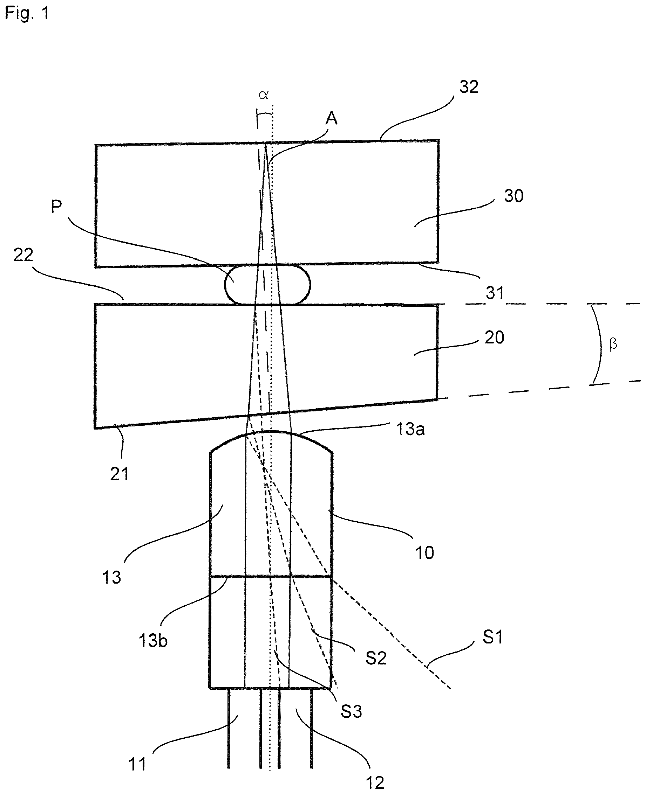

Fig. 1 zeigt einen prinzipiellen Aufbau einer Vorrichtung für eine lichtspektroskopische Analyse gemäß einer ersten Ausführungsform. Insbesondere ist ein Messkopf 10 vorgesehen, der mit einer Anregungsfaser 11 und einer Detektionsfaser 12 sowie einer Linse 13 ausgebildet ist. Die Linse 13 weist eine gekrümmte, insbesondere konvexe Linsenfläche 13a auf, durch die Anregungslicht in Richtung der Probe P aus dem Messkopf 10 austritt. Die Anregungsfaser 11 und die Detektionsfaser 12 sind vorliegend von der planen Eintrittsfläche 13b beabstandet dargestellt, können jedoch je nach Bedarf auch direkt mit der planen Eintrittsfläche der Linse gekoppelt sein.

Weiter ist denkbar, das Anregungslicht bzw. das zu detektierende Licht ohne optische Fasern in den Messkopf, hier die Linse 13 bzw. aus ihm/ihr heraus zu leiten, beispielsweise mithilfe von Lichtumlenkungen wie Spiegeln oder Prismen, die an geeigneten Positionen unter dem Messkopf/der Linse 13 angeordnet sind und das Anregungslicht von der Lichtquelle zum Messkopf/zur Linse 13 bzw. das zu analysierende Licht von der Linse 13 zum Detektor umlenken.

Die Linse 13 definiert eine optische Achse A, die in diesem Ausführungsbeispiel durch die Probe P, insbesondere deren Mitte hindurchgeht. Durch die Anregungsfaser 11 wird Anregungslicht zugeführt, das nach Bestrahlen der Probe P zur Detektionsfaser 12 gelangt. Die Detektionsfaser 12 steht mit einem Spektrometer, insbesondere einem Fluoreszenz-Spektrometer oder einem Lumineszenz-Spektrometer, in Verbindung, mit dem eine spektralphotometrische Analyse vorgenommen werden kann.

Die Anregungsfaser 11 ist mit einer Lichtquelle verbunden, wobei die Lichtquelle beispielsweise eine Xenon-Lampe, insbesondere eine Xenon-Blitzlichtlampe, oder ein Laser sein kann.

In der in Fig. 1 dargestellten ersten Ausführungsform ist der Messkopf 10 unterhalb einer Probenaufnahme 20 (auch "Aufnahme" bezeichnet) angeordnet. Die Probenaufnahme 20 umfasst eine zur Linsenfläche 13a weisende geneigte Fläche 21, deren Normale mit der optischen Achse A der Linse 13 einen Winkel bildet, und eine Aufnahmefläche 22 auf, die in diesem Ausführungsbeispiel eine zur optischen Achse A parallele Normale besitzt. Die geneigte Fläche 21 hat einen Winkel von etwa 5° gegenüber der Ebene der Aufnahmefläche 22. Die Aufnahmefläche 22 ist eingerichtet, eine flüssige Probe P aufzunehmen und in einem definierten Bereich zu halten.

An der vom Messkopf 10 entgegengesetzten Seite der Probenaufnahme 20 ist ein Spiegel 30 mit einer Eintrittsfläche 31 angeordnet, der ein vom Messkopf 10 ausgesandtes Licht zum Messkopf 10 zurückreflektiert. Der Spiegel kann relativ zur Achse A im Bereich von 0-1° relativ zur Ebene der Aufnahmefläche 22 geneigt sein.

Die Probe P, hier im Beispiel ein Flüssigkeitstropfen, wird vorliegend zwischen der Eintrittsfläche 31 des Spiegels 30 und der Aufnahmefläche 22 der Probenaufnahme 20 gehalten, beispielsweise unter Ausnutzung seiner Oberflächenspannung. Das von der Anregungsfaser 11 ausgegebene Anregungslicht gelangt durch die Linse 13 und tritt an der Linsenfläche 13a aus dem Messkopf 10 aus. An der Grenzfläche der Linsenfläche 13a wird ein Anteil des Anregungslichts zurückreflektiert. Dieser Streulichtanteil wird als Streulicht S1 bezeichnet. Das Streulicht S1 tritt im Wesentlichen derart am Messkopf 10 aus, dass das Streulicht S1 nicht zur Detektionsfaser gelangt.

Ein Anteil des durch die Linsenfläche 13a hindurchtretenden Lichts wird an der geneigten Fläche 21 der Aufnahme reflektiert. Dieser Streulichtanteil wird als Streulicht S2 bezeichnet. Das Streulicht S2 gelangt im Wesentlichen nicht zur Detektionsfaser 12 und wird somit nicht erfasst.

Der Anteil des in die Aufnahme 20 eintretenden Anregungslichts wird zur Probe P weitergeleitet, wobei das an der Aufnahmefläche 22 aus der Aufnahme 20 austretende Licht teilweise reflektiert wird. Der reflektierte Lichtanteil wird als Streulicht S3 bezeichnet. Das Streulicht S3 gelangt größtenteils zur Detektionsfaser 12 und wird somit ebenfalls erfasst. Da an der Aufnahmefläche 22, die eine Grenzfläche darstellt, ein Übergang von Glas zu Wasser vorliegt, wird die Stärke der Reflexion im Vergleich zu einem Glas-Luft-Übergang deutlich gemindert. Bereits aus diesem Grund sind Einflüsse des Streulichts S3 eher gering.

Der zur Probe P weitergeleitete Anteil des Anregungslichts tritt durch die Probe hindurch (wobei die Anregung der Probe stattfindet) und wird nachfolgend am Spiegel 30 reflektiert. Das reflektierte Licht tritt nochmals durch die Probe P (erneute Anregung) sowie durch die Aufnahme 20, und wird in die Linse 13 eingekoppelt. Von der Linse 13 gelangt das Licht in die Detektionsfaser 12, und kann von dieser zu einem Spektrometer weitergeleitet werden.

In einer hier nicht gezeigten bevorzugten Ausführungsform ist die Probenaufnahme 20 mit mehreren Probenaufnahmestellen ausgestattet, die senkrecht zur Ebene der Figur beabstandet sind. An jeder dieser Probeaufnahmestellen kann sich demnach eine Probe P befinden. Der Messkopf 10 ist entsprechend in einer Ebene parallel zur Probenaufnahmefläche 22, und dabei insbesondere in einer senkrecht zur Ebene der Figur verlaufenden Richtung verfahrbar. Auf diese Weise können mehrere Proben hintereinander seriell abgefahren werden. In einer weiteren Variante können mehrere Messköpfe 10 vorgesehen sein, so dass mehrere Proben gleichzeitig detektiert und analysiert werden können.

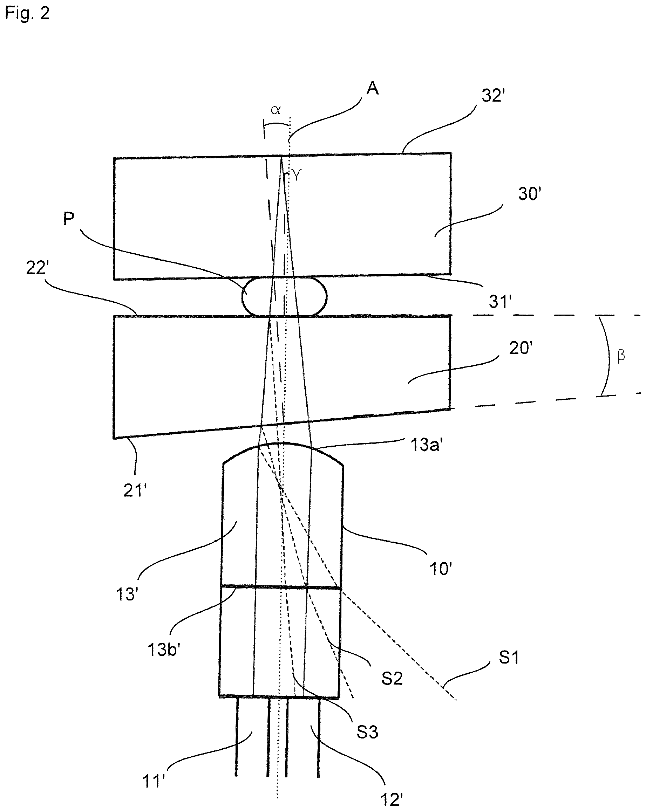

In Fig. 2 ist eine schematische Seitenansicht der Vorrichtung gemäß der zweiten Ausführungsform der Erfindung dargestellt. Für entsprechende Komponenten werden gleiche Bezugszeichen verwendet. Der Aufbau der zweiten Ausführungsform unterscheidet sich im Wesentlichen durch die Ausrichtung des Messkopfs 10.

Relativ zu einer Normalen der Aufnahmefläche 22' der Aufnahme 20' ist die optische Achse A des Messkopfs 10 in der Ausführungsform unter einem Winkel von etwa -1° geneigt. Das vom Messkopf 10' ausgesandte Licht trifft nachfolgend auf eine keilförmig ausgebildete Probenaufnahme 20'. Die geneigte Fläche 21' hat einen Winkel von etwa 5° gegenüber der Probenaufnahmefläche 22'. Ferner kann der Spiegel 30' relativ zur optischen Achse A im Bereich von 0-1° relativ zur Ebene der Aufnahmefläche 22' geneigt angeordnet sein.

Das von der Anregungsfaser 11' ausgegebene Anregungslicht tritt durch die Eintrittsfläche 13b' der Linse, durchquert diese und tritt an der konvexen Linsenfläche 13a' aus dem Messkopf 10' aus. An der Grenzfläche der Linsenfläche 13a' wird ein Anteil des Anregungslichts zurückreflektiert. Dieser Streulichtanteil wird als Streulicht S1 bezeichnet. Das Streulicht S1 tritt im Wesentlichen derart am Messkopf 10' aus, dass das Streulicht S1 nicht zur Detektionsfaser gelangt.

Ein Anteil des weitergeleiteten Anregungslichts wird an der geneigten Fläche 21' der Aufnahme 20' teilweise reflektiert. Dieser Streulichtanteil wird als Streulicht S2 bezeichnet. Dieses gelangt nicht zur Detektionsfaser 12' und wird somit auch nicht erfasst.

Eine weitere Streuung des Anregungslichts tritt an der Aufnahmefläche 22' auf. Ein entsprechender Streulichtanteil wird als Streulicht S3 bezeichnet. Das Streulicht S3 gelangt größtenteils zur Detektionsfaser 12'. Da an der Aufnahmefläche 22', die eine Grenzfläche darstellt, ein Übergang von Glas zu Wasser vorliegt, wird die Stärke der Reflexion im Vergleich zu einem Glas-Luft-Übergang deutlich gemindert. Bereits aus diesem Grund sind Einflüsse des Streulichts S3 eher gering.

Der Anteil des aus der Aufnahme 20' austretenden Anregungslichts wird zur Probe P weitergeleitet und nachfolgend am Spiegel 30' reflektiert. Das reflektierte Licht gelangt nochmals durch die Probe P und die Aufnahme 20', und wird in die Linse 13' eingekoppelt. Von der Linse 13' gelangt das Licht in die Detektionsfaser 12', und kann von dieser zu einem Spektrometer weitergeleitet werden.

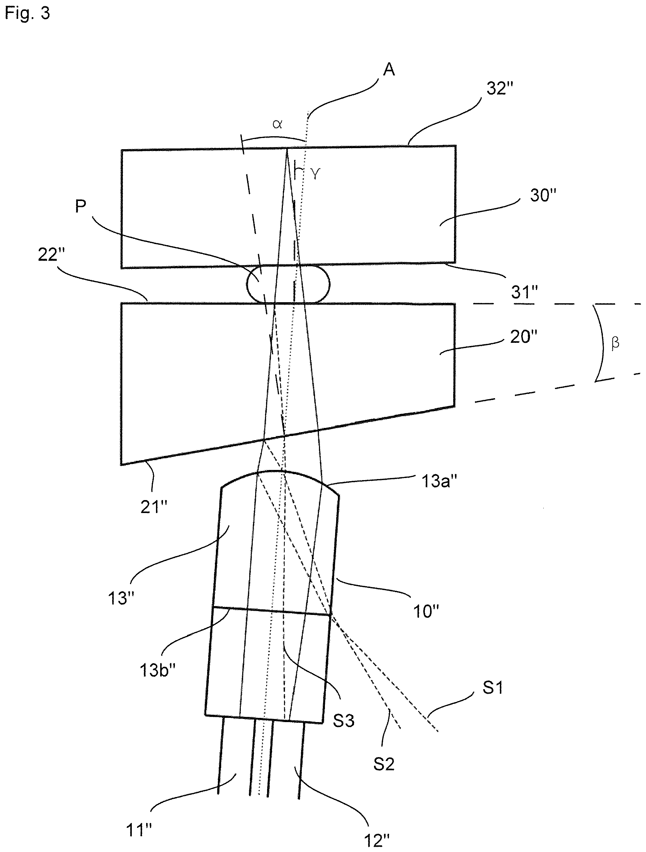

In Fig. 3 wird eine dritte Ausführungsform der Erfindung dargestellt. Der Aufbau der dritten Ausführungsform unterscheidet sich im Wesentlichen durch die Ausrichtung des Messkopfs 10", der im Vergleich zur Ausgestaltung der zweiten Ausführungsform in einem größeren Winkel geneigt ist. Ferner weist eine geneigte Fläche 21" einer Probenaufnahme 20" der dritten Ausführungsform einen größeren Winkel relativ zur Ebene der Aufnahmefläche 22" als bei der Vorrichtung der ersten und zweiten Ausführungsform.

Der Messkopf 10" der dritten Ausführungsform umfasst eine Anregungsfaser 11", eine Detektionsfaser 12" sowie eine Linse 13". Die Linse 13" weist eine gekrümmte, insbesondere konvexe Linsenfläche 13a" auf, durch die Anregungslicht in Richtung der der Probe P aus dem Messkopf 10" austritt. Die Anregungsfaser 11" und die Detektionsfaser 12" sind vorliegend von der planen Eintrittsfläche 13b" beabstandet dargestellt, können jedoch je nach Bedarf auch direkt mit der planen Eintrittsfläche der Linse gekoppelt sein. Die Linse 13" definiert eine optische Achse A, die durch die Probe P hindurchgeht. Durch die Anregungsfaser 11" wird Anregungslicht zugeführt, das nach Bestrahlen der Probe P zur Detektionsfaser 12" gelangt. Die Detektionsfaser 12" steht mit einem Spektrometer, insbesondere einem Fluoreszenz-Spektrometer oder einem Lumineszenz-Spektrometer, in Verbindung, mit dem eine spektralphotometrische Analyse vorgenommen werden kann.

Die Anregungsfaser 11" ist mit einer Lichtquelle verbunden, wobei die Lichtquelle beispielsweise eine Xenon-Lampe, insbesondere eine Xenon-Blitzlichtlampe, oder ein Laser sein kann.

In der in Fig. 3 dargestellten dritten Ausführungsform ist der Messkopf 10", wie bei den zuvor beschriebenen Ausführungsformen, unterhalb einer Probenaufnahme 20" angeordnet. Die Probenaufnahme 20" umfasst eine zur Linsenfläche 13a" weisende geneigte Fläche 21", deren Normale mit der optischen Achse A der Linse 13" einen Winkel bildet, und eine Aufnahmefläche 22" auf, wobei die Normale der Aufnahmefläche 22" in diesem Ausführungsbeispiel einen Winkel von 4° zur optischen Achse A aufweist. Die geneigte Fläche 21" hat einen Winkel von etwa 10° gegenüber der Ebene der Aufnahmefläche 22". Die Aufnahmefläche 22" ist eingerichtet, eine flüssige Probe P aufzunehmen und in einem definierten Bereich zu halten.

An der vom Messkopf 10" entgegengesetzten Seite der Probenaufnahme 20" ist ein Spiegel 30" mit einer Eintrittsfläche 31" angeordnet, der ein vom Messkopf 10" ausgesandtes Licht zum Messkopf 10" zurückreflektiert. Der Spiegel kann relativ zur Achse A im Bereich von 0-1° relativ zur Ebene der Aufnahmefläche 22" geneigt sein.

Die Probe P, die auch im Beispiel der dritten Ausführungsform ein Flüssigkeitstropfen ist, wird vorliegend zwischen der Eintrittsfläche 31" des Spiegels 30" und der Aufnahmefläche 22" der Probenaufnahme 20" gehalten, beispielsweise unter Ausnutzung seiner Oberflächenspannung.

Das von der Anregungsfaser 11" ausgegebene Anregungslicht gelangt durch die Linse 13" und tritt an der Linsenfläche 13a" aus dem Messkopf 10" aus. An der Grenzfläche der Linsenfläche 13a" wird ein Anteil des Anregungslichts zurückreflektiert. Dieser Streulichtanteil wird als Streulicht S1 bezeichnet. Das Streulicht S1 tritt im Wesentlichen derart am Messkopf 10" aus, dass das Streulicht S1 nicht zur Detektionsfaser gelangt.

Ein Anteil des durch die Linsenfläche 13a" hindurchtretenden Lichts wird an der geneigten Fläche 21" der Aufnahme derart reflektiert, dass dieser Lichtanteil in den Messkopf 10" geleitet wird. Dieser Streulichtanteil wird als Streulicht S2 bezeichnet. Das Streulicht S2 gelangt im Wesentlichen nicht zur Detektionsfaser 12 und wird somit nicht erfasst.

Der Anteil des in die Aufnahme 20" eintretenden Anregungslichts wird zur Probe P weitergeleitet, wobei das an der Aufnahmefläche 22" aus der Aufnahme 20" austretende Licht teilweise reflektiert wird. Der reflektierte Lichtanteil wird als Streulicht S3 bezeichnet. Das Streulicht S3 gelangt größtenteils zur Detektionsfaser 12". Da an der Aufnahmefläche 22", die eine Grenzfläche darstellt, ein Übergang von Glas zu Wasser vorliegt, wird die Stärke der Reflexion im Vergleich zu einem Glas-Luft-Übergang deutlich gemindert. Bereits aus diesem Grund sind Einflüsse des Streulichts S3 eher gering.

Der zur Probe P weitergeleitete Anteil des Anregungslichts tritt durch die Probe hindurch (wobei die Anregung der Probe stattfindet) und wird nachfolgend am Spiegel 30" reflektiert. Das reflektierte Licht tritt nochmals durch die Probe P (erneute Anregung) sowie durch die Aufnahme 20", und wird in die Linse 13" eingekoppelt. Von der Linse 13" gelangt das Licht in die Detektionsfaser 12", und kann von dieser zu einem Spektrometer weitergeleitet werden.

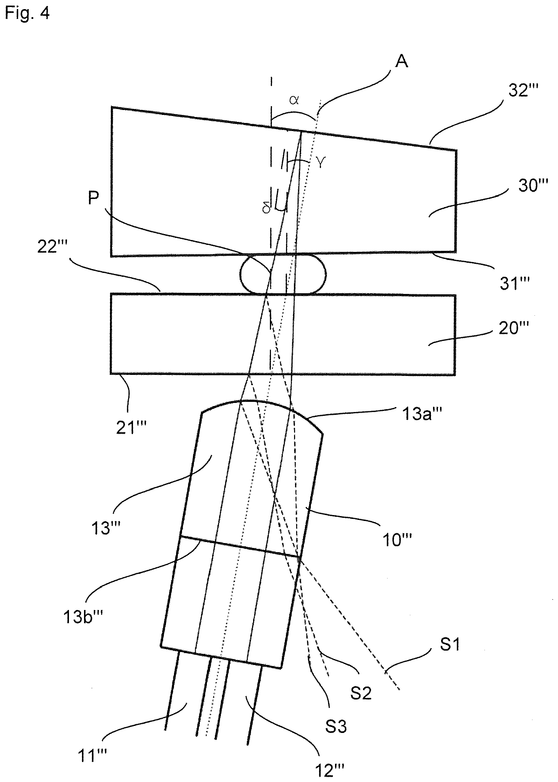

In Fig. 4 wird ein Beispiel für eine Vorrichtung zur lichtspektroskopischen Analyse einer Probe außerhalb des Umfangs der angehängten Ansprüche dargestellt, die sich von den erfindungsgemäßen Ausführungen im Wesentlichen dadurch unterscheidet, dass anstelle der geneigten Fläche der Probenaufnahme im vierten Ausführungsbeispiel die Rückseite 32‴ des Spiegels eine geneigte Reflexionsfläche darstellt.

Der Messkopf 10‴ dieses Beispiels umfasst eine Anregungsfaser 11‴, eine Detektionsfaser 12‴ sowie eine Linse 13‴. Die Linse 13‴ weist eine gekrümmte, insbesondere konvexe Linsenfläche 13a‴ auf, durch die Anregungslicht in Richtung der Probe P aus dem Messkopf 10‴ austritt.

Die Anregungsfaser 11‴ und die Detektionsfaser 12‴ sind von der planen Eintrittsfläche 13b‴ beabstandet dargestellt, können jedoch je nach Bedarf auch direkt mit der planen Eintrittsfläche der Linse gekoppelt sein. Die Linse 13‴ definiert eine optische Achse A, die durch die Probe P hindurchgeht. Durch die Anregungsfaser 11‴ wird Anregungslicht zugeführt, das nach Bestrahlen der Probe P zur Detektionsfaser 12‴ gelangt. Die Detektionsfaser 12‴ steht mit einem Spektrometer, insbesondere einem Fluoreszenz-Spektrometer oder einem Lumineszenz-Spektrometer, in Verbindung, mit dem eine spektralphotometrische Analyse vorgenommen werden kann.

Die Anregungsfaser 11‴ ist mit einer Lichtquelle verbunden, wobei die Lichtquelle beispielsweise eine Xenon-Lampe, insbesondere eine Xenon-Blitzlichtlampe, oder ein Laser sein kann.

Der Messkopf 10‴ dieses Beispiels ist, wie bei den zuvor beschriebenen erfindungsgemäßen Ausführungsformen, unterhalb einer Probenaufnahme 20‴ angeordnet. Die Probenaufnahme 20‴ umfasst eine zur Linsenfläche 13a" weisende Eintrittsfläche 21‴, die parallel oder im Wesentlichen parallel zu einer Ebene einer Aufnahmefläche 22‴ der Probenaufnahme 20‴ angeordnet ist.

Auf der Aufnahmefläche 22‴ ist eine flüssige Probe P aufgenommen, und diese wird in einem definierten Bereich gehalten. Die Probe P wird zwischen der Eintrittsfläche 31‴ des Spiegels 30‴ und der Aufnahmefläche 22‴ der Probenaufnahme 20‴ gehalten, beispielsweise unter Ausnutzung seiner Oberflächenspannung.

An der vom Messkopf 10‴ entgegengesetzten Seite der Probenaufnahme 20‴ ist ein Spiegel 30‴ mit einer Eintrittsfläche 31‴ angeordnet, der ein vom Messkopf 10‴ ausgesandtes Licht an einer Rückseite 32‴ zum Messkopf 10‴ zurückreflektiert. Die Rückseite 32‴ des Spiegels ist relativ zur Ebene der Eintrittsfläche 31‴ des Spiegels 30‴ geneigt.

Das von der Anregungsfaser 11‴ ausgegebene Anregungslicht gelangt durch die Linse 13‴ und tritt an der Linsenfläche 13a‴ aus dem Messkopf 10‴ aus. An der Grenzfläche der Linsenfläche 13a‴ wird ein Anteil des Anregungslichts zurückreflektiert. Dieser Streulichtanteil wird als Streulicht S1 bezeichnet. Das Streulicht S1 tritt im Wesentlichen derart am Messkopf 10‴ aus, dass das Streulicht S1 nicht zur Detektionsfaser gelangt.

Ein Anteil des durch die Linsenfläche 13a‴ hindurchtretenden Lichts wird an der geneigten Fläche 21‴ der Aufnahme reflektiert. Dieser Streulichtanteil wird als Streulicht S2 bezeichnet. Das Streulicht S2 gelangt im Wesentlichen nicht zur Detektionsfaser 12‴ und wird somit nicht erfasst.

Der Anteil des in die Aufnahme 20‴ eintretenden Anregungslichts wird zur Probe P weitergeleitet, wobei das an der Aufnahmefläche 22‴ aus der Aufnahme 20‴ austretende Licht teilweise reflektiert wird. Der reflektierte Lichtanteil wird als Streulicht S3 bezeichnet. Das Streulicht S3 gelangt im Wesentlichen nicht zur Detektionsfaser 12‴ und wird somit nicht erfasst.

Der zur Probe P weitergeleitete Anteil des Anregungslichts tritt durch die Probe hindurch (wobei die Anregung der Probe stattfindet) und wird nachfolgend am Spiegel 30‴ reflektiert. Das reflektierte Licht tritt nochmals durch die Probe P (erneute Anregung) sowie durch die Aufnahme 20‴, und wird in die Linse 13‴ eingekoppelt. Von der Linse 13‴ gelangt das Licht in die Detektionsfaser 12‴, und kann von dieser zu einem Spektrometer weitergeleitet werden.

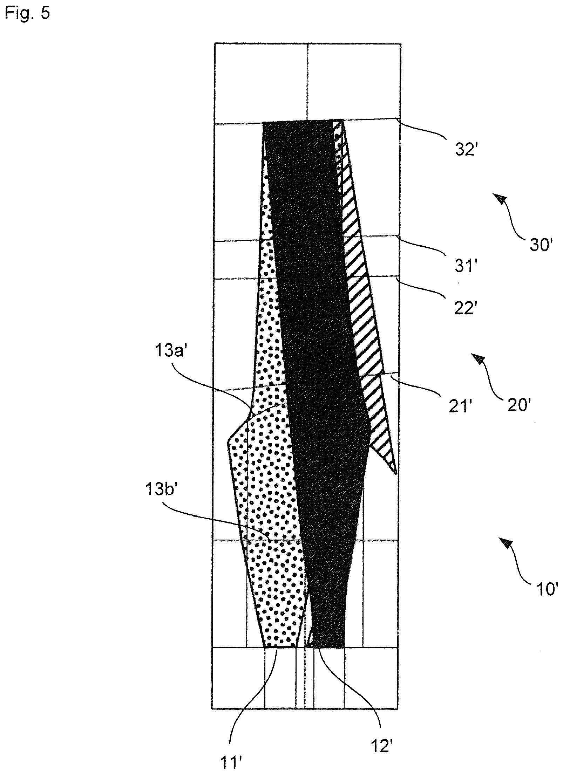

In Fig. 5 wird der Strahlengang der Vorrichtung gemäß der zweiten Ausführungsform veranschaulicht. Die gepunktete Hintergrundschattierung in Fig. 5 zeigt den Strahl von der Faser bis zum Spiegel (ohne Reflexionen). Insbesondere ist zu erkennen, wie Anregungslicht durch die Anregungsfaser 11' über die plane Rückseite 13b' der Messkopflinse in die Linse 13' des Messkopfs 10' eingekoppelt wird und durch die gekrümmte Linsenfläche 13a' des Messkopfes austritt.

Nach Austritt des Anregungslichts aus der gekrümmten Linsenfläche 13a' trifft dieses auf die geneigte Fläche 21' der Probenaufnahme 20' auf und wird durch die Probenaufnahme transmittiert. An der Aufnahmefläche 22' der Probenaufnahme 20' tritt das Anregungslicht aus der Probeaufnahme 20' aus und gelangt entlang des Strahlengangs durch die von der Probenaufnahme 20' aufgenommene Probe. Nachfolgend treten die Lichtstrahlen (die nun u.a. ein durch die Anregung der Probe entstandenes Signallicht enthalten) in den Spiegel 30' ein (Eintrittsfläche 31'), und werden an der Rückseite 32' des Spiegels 30' reflektiert. Der weitere Verlauf des Strahlengangs erfolgt in entsprechend umgekehrter Reihenfolge, sodass die Lichtstrahlen wiederum durch die von der Aufnahme 20' aufgenommene Probe gelangen und über die gekrümmte Linsenfläche 13a' in Richtung der Detektionsfaser 12' geleitet werden.

Anhand von Messungen hat sich gezeigt, dass die Ausrichtung der geneigten Fläche 21' der Aufnahme 20' einen großen Einfluss auf das Auftreten von Streulicht hat, das zur Detektionsfaser gelangt.

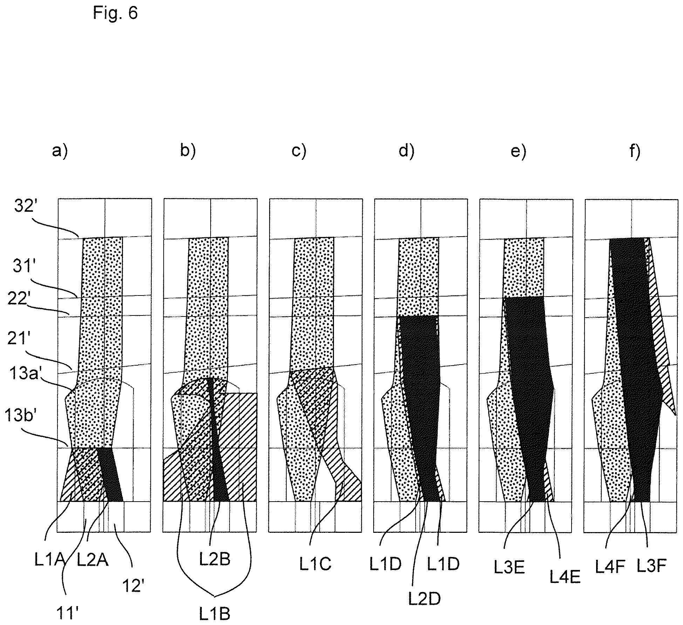

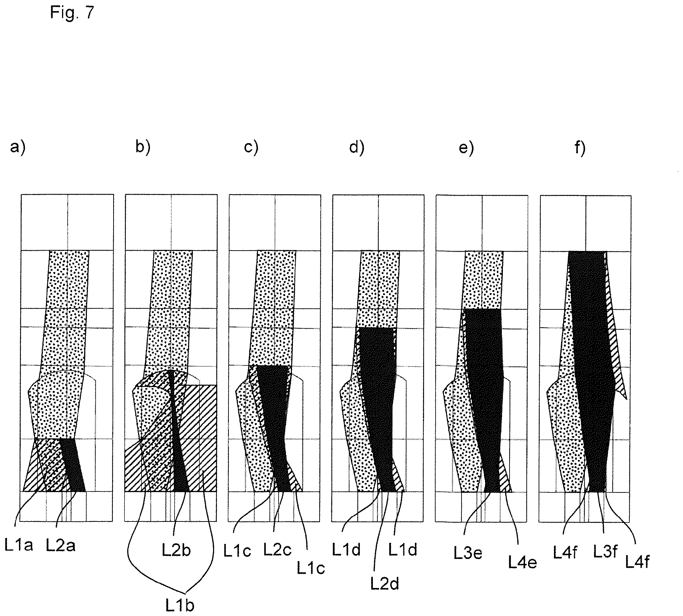

Anhand der Figuren 6 und 7 wird eine Vorrichtung gemäß der Erfindung mit einer konventionellen Vorrichtung verglichen, um unterschiedliche Streulicht-Anteile und deren Auswirkung auf das Messergebnis aufzuzeigen. In den einzelnen Teilansichten erkennt man die nachfolgend detaillierter beschriebenen Strahlengänge, jeweils die Anregungs- und Detektionsfasern sowie die Grenzflächen der verschiedenen optischen Komponenten. Diese Komponenten für Figur 6 entsprechen den in Figur 2 gezeigten. Teilansicht f) gemäß Figur 6 entspricht der Ansicht in Figur 5.

In Teilansicht a) gemäß Fig. 6 wird das an der planen Rückseite 13b' der Messkopf-Linse auftretende Streulicht dargestellt, wobei der zur Detektionsfaser 12' geleitete Streulicht-Anteil L2A sowie der nicht zur Detektionsfaser 12' geleitete Streulicht-Anteil L1A veranschaulicht werden. Der zur Detektionsfaser 12' geleitete Streulicht-Anteil L2A des Streulichts verursacht dabei nachteilige Effekte (sogenannte "Ghost-Images"). Im vergleichenden Beispiel (Figur 7) sind in Teilansicht a) ebenso der zur Detektionsfaser geleitete Streulicht-Anteil L2a sowie der nicht zur Detektionsfaser geleitete Streulicht-Anteil L1a dargestellt.

In Teilansicht b) gemäß Fig. 6 wird entsprechend das an der gekrümmten, konvexen Linsenfläche 13a' des Messkopfes auftretende Streulicht dargestellt, wobei wiederum der zur Detektionsfaser 12` geleitete Streulicht-Anteil L2B sowie der nicht zur Detektionsfaser 12` geleitete Streulicht-Anteil L1B veranschaulicht werden. In Figur 7 sind in Teilansicht b) ebenso der zur Detektionsfaser geleitete Streulicht-Anteil L2b sowie der nicht zur Detektionsfaser geleitete Streulicht-Anteil L1b dargestellt.

Entsprechend wird in Teilansicht c) gemäß Fig. 6 das an der geneigten Fläche 21` der Aufnahme 20` auftretende Streulicht gezeigt, wobei in Teilansicht c) gemäß Figur 6 im Wesentlichen lediglich ein nicht zur Detektionsfaser 12` geleiteter Streulicht-Anteil L1C vorliegt.

Beim Vergleich der Teilansichten c) der Figuren 6 und 7 zeigt sich, dass bei der erfindungsgemäßen Anordnung (Figur 6) der zur Detektionsfaser 12` geleitete Streulicht-Anteil deutlich reduziert werden kann bzw. im Wesentlichen kein Streulicht-Anteil zur Detektionsfaser gelangt. Der zur Detektionsfaser gelangende Streulichtanteil L2c in Figur 7c) hingegen ist (im Vergleich zum nicht zur Detektionsfaser gelangenden Streulichtanteil L1c) deutlich ausgeprägt.

In der Teilansicht d) der Figuren 6 und 7 werden Streulicht-Anteile durch Reflexion an der Aufnahmefläche 22' der Probenaufnahme 20' dargestellt. Insbesondere wird in Teilansicht d) der Figur 6 ein nicht zur Detektionsfaser 12` geleiteter Streulicht-Anteil L1D und ein zur Detektionsfaser 12` geleiteter Streulicht-Anteil L2D dargestellt. Fig. 7 zeigt ebenso einen nicht zur Detektionsfaser geleiteten Streulicht-Anteil L1d und einen zur Detektionsfaser geleiteten Streulicht-Anteil L2d.

In Teilansicht e) der Figuren 6 und 7 wird ein an der Eintrittsfläche 31` des Spiegels 30` reflektiertes, aber nicht von der Detektionsfaser 12` eingefangenes Signallicht L4E (Fig. 6) bzw. L4e (Fig. 7) sowie ein von der Detektionsfaser 12' aufgenommenes Signallicht L3E (Fig. 6) bzw. L3e (Fig. 7) dargestellt.

In der Teilansicht f) der Figuren 6 und 7 sind ein an der Rückseite 32' des Spiegels 30' reflektiertes, nicht von der Detektionsfaser 12' eingefangenes Signallicht L4F (Fig. 6) bzw. L4f (Fig. 7) und ein von der Detektionsfaser aufgenommenes Signallicht L3F (Fig. 6) bzw. L3f (Fig. 7) dargestellt.

## Patentansprüche

1. Vorrichtung für eine lichtspektroskopische Analyse, aufweisend:
eine Probenaufnahme (20-20') mit einer Probenaufnahmefläche (22-22") zur Aufnahme einer flüssigen Probe (P),
einen Messkopf (10-10") zur Ausgabe von Anregungslicht in Richtung der Probe (P) und Aufnahme von Signallicht von der Probe,
wobei die Probenaufnahme (20-20") eine zum Messkopf (10-10") weisende Fläche (21-21") aufweist, die der Probenaufnahmefläche (22-22") gegenüberliegt und deren eine Normale mit einer optischen Achse (A) des Messkopfes (10-10") einen ersten, von Null verschiedenen Winkel (α) bildet, und wobei die Ausgabe von Anregungslicht in Richtung der Probe und die Aufnahme von Signallicht von der Probe durch diese Fläche (20-22") erfolgt,
**dadurch gekennzeichnet, dass** die Probenaufnahme (20-20") im Querschnitt keilförmig ausgestaltet ist und somit die der Probenaufnahmefläche (22-22") gegenüberliegende, zum Messkopf weisende Fläche (21-21") mit der Probenaufnahmefläche einen zweiten, von Null verschiedenen Winkel (β) bildet.

2. Vorrichtung gemäß Anspruch 1, **dadurch gekennzeichnet, dass** der zweiten Winkel (β) im Bereich von 2° bis 45°, bevorzugt im Bereich von 3° bis 7°, besonders bevorzugt im Wesentlichen 5° beträgt.

3. Vorrichtung gemäß einem der vorangegangenen Ansprüche, **dadurch gekennzeichnet, dass** die optische Achse (A) des Messkopfs (10-10") mit einer Normalen der Aufnahmefläche (22-22") der Probenaufnahme (20-20") einen dritten Winkel (γ) im Bereich von 1° bis 30°, bevorzugt 1° bis 3°, besonders bevorzugt im Wesentlichen 1°, bildet.

4. Vorrichtung gemäß einem der vorangegangenen Ansprüche, ferner umfassend einen Spiegel (30-30"), der einen definierten Abstand von der Probenaufnahmefläche (22-22") aufweist und an dem ein durch die Probenaufnahme (20-20") gelangtes Licht reflektiert wird.

5. Vorrichtung gemäß Anspruch 4, **dadurch gekennzeichnet, dass** eine Differenz aus einem vierten Winkel der Normalen des Spiegels (30-30") und eines dritten Winkels der optischen Achse (A) des Messkopfes (10-10"), jeweils relativ zu einer Normalen der Aufnahmefläche (22-22") gemessen, im Bereich von 2° bis 30°, bevorzugt 2° bis 4° liegt, und besonders bevorzugt im Wesentlichen 2° beträgt.

6. Vorrichtung gemäß Anspruch 4 oder 5, **dadurch gekennzeichnet, dass** der Spiegel eine zum Messkopf (10-10") weisende geneigte Fläche aufweist.

7. Vorrichtung gemäß einem der vorangegangenen Ansprüche, **dadurch gekennzeichnet, dass** der Messkopf (10-10''), in vertikaler Richtung betrachtet, unterhalb der Aufnahme (20-20") angeordnet ist.

8. Vorrichtung gemäß einem der vorangegangenen Ansprüche, **dadurch gekennzeichnet, dass** am Messkopf (10-10") eine Anregungsfaser (11-11") und eine Detektionsfaser (12-12") angekoppelt sind, wobei durch die Anregungsfaser (11-11") Anregungslicht zugeführt wird, das nach Bestrahlen der Probenaufnahme (20-20") zur Detektionsfaser gelangt.

9. Vorrichtung gemäß einem der vorangegangenen Ansprüche, **dadurch gekennzeichnet, dass** der Messkopf (10-10") eine Linse (13-13") aufweist.

10. Vorrichtung gemäß einem der vorangegangenen Ansprüche, ferner umfassend ein Spektrometer, insbesondere ein Fluoreszenz-Spektrometer oder ein Lumineszenz-Spektrometer.

11. Vorrichtung gemäß einem der vorangegangenen Ansprüche, umfassend mehrere Probenaufnahmen mit einer Probenaufnahmefläche zur Aufnahme einer, insbesondere flüssigen, Probe sowie einen oder mehrere bewegliche Messköpfe zur Ausgabe von Anregungslicht in Richtung der Probe und Aufnahme von Signallicht von der Probe.

12. Vorrichtung gemäß einem der vorangegangenen Ansprüche, umfassend eine Lichtquelle zum Bereitstellen des Anregungslichts für den Messkopf, wobei bevorzugt ist, dass die Lichtquelle eine Xenon-Lampe, insbesondere eine Xenon-Blitzlichtlampe, aufweist.

13. Verwendung einer Vorrichtung gemäß einem der vorangegangenen Ansprüche zur lichtspektroskopischen Analyse von einer oder mehreren, insbesondere flüssigen, Proben, die an der Probenaufnahme (20-20") oder mehreren Probenaufnahmen vorgesehen ist/sind.

## Claims

1. A device for a light-spectroscopic analysis, having:
a sample receiver (20-20') having a sample receiving surface (22-22") for receiving a liquid sample (P),
a measuring head (10-10") for outputting excitation light toward the sample (P) and receiving signal light from the sample,
wherein the sample receiver (20-20") has a surface (21-21") which faces the measuring head (10-10") and which is opposite the sample receiving surface (22-22") and whose one normal forms a first, non-zero angle (α) with an optical axis (A) of the measuring head (10-10"), and wherein the output of excitation light toward the sample and the reception of signal light from the sample happens through said surface (20-22"),
**characterised in that** the sample receiver (20-20") is wedge-shaped in cross-section and thus the surface (21-21") opposite the sample receiving surface (22-22") and facing the measuring head forms a second, non-zero angle (β) with the sample receiving surface.

2. The device according to claim 1, **characterised in that** the second angle (β) is in the range from 2° to 45°, preferably in the range from 3° to 7°, most preferably substantially 5°.

3. The device according to any of the preceding claims, **characterised in that** the optical axis (A) of the measuring head (10-10") forms a third angle (γ) in the range from 1° to 30°, preferably 1° to 3°, most preferably substantially 1°, with a normal to the receiving surface (22-22") of the sample receiver (20-20").

4. The device according to any of the preceding claims, further comprising a mirror (30-30") which has a defined distance from the sample receiving surface (22-22") and on which a light passing through the sample receiver (20-20") is reflected.

5. The device according to claim 4, **characterised in that** a difference of a fourth angle of the normal of the mirror (30-30") and a third angle of the optical axis (A) of the measuring head (10-10"), each measured relative to a normal of the receiving surface (22-22"), is in the range of 2° to 30°, preferably 2° to 4°, and most preferably substantially 2°.

6. The device according to claim 4 or 5, **characterised in that** the mirror has an inclined surface facing the measuring head (10-10").

7. The device according to any of the preceding claims, **characterised in that** the measuring head (10-10"), viewed in the vertical direction, is arranged below the receiver (20-20").

8. The device according to any of the preceding claims, **characterised in that** an excitation fibre (11-11") and a detection fibre (12-12") are coupled to the measuring head (10-10"), wherein excitation light is supplied through the excitation fibre (11-11") which reaches the detection fibre after irradiation of the sample receiver (20-20").

9. The device according to any of the preceding claims, **characterised in that** the measuring head (10-10") has a lens (13-13").

10. The device according to any of the preceding claims, further comprising a spectrometer, in particular a fluorescence spectrometer or a luminescence spectrometer.

11. The device according to any of the preceding claims, comprising a plurality of sample receivers having a sample receiving surface for receiving a sample, in particular a liquid sample, and one or more movable measuring heads for outputting excitation light towards the sample and receiving signal light from the sample.

12. The device according to any of the preceding claims, comprising a light source for providing the excitation light for the measuring head, wherein it is most preferred that the light source comprises a xenon lamp, in particular a xenon flash light lamp.

13. Use of a device according to any of the preceding claims for light-spectroscopic analysis of one or more of, in particular liquid, samples provided at the sample receiver (20-20") or the plurality of sample receivers.

## Revendications

1. Dispositif pour analyse spectroscopique, présentant :
un logement pour échantillon (20 - 20') avec une surface de logement pour échantillon (22 - 22"), destiné à loger un échantillon liquide (P),
une tête de mesure (10 - 10") destinée à émettre de la lumière d'excitation en direction de l'échantillon (P) et à recevoir un signal lumineux provenant de l'échantillon,
dans lequel le logement pour échantillon (20 - 20") présente une face (21 - 21") pointant vers la tête de mesure (10 - 10"), qui fait face à la face de logement pour échantillon (22 - 22") et dont une normale forme avec un axe optique (A) de la tête de mesure (10 - 10") un premier angle (α) différent de 0, et dans lequel l'émission de lumière d'excitation a lieu en direction de l'échantillon et la réception du signal lumineux par l'échantillon a lieu par ladite face (20 - 22"),
**caractérisé en ce que** le logement pour échantillon (20 - 20") est, en section transversale, configuré en forme de coin et ainsi la face (21 - 21") pointant vers la tête de mesure, faisant face à la face de logement pour échantillon (22 - 22") forme avec la face de logement pour échantillon un deuxième angle (β) différent de 0.

2. Dispositif selon la revendication 1, **caractérisé en ce que** le deuxième angle (β) se situe dans la plage de 2° à 45°, de manière préférée dans la plage de 3° à 7°, de manière particulièrement préférée est sensiblement de 5°.

3. Dispositif selon l'une quelconque des revendications précédentes, **caractérisé en ce que** l'axe optique (A) de la tête de mesure (10 - 10") forme avec une normale de la face de logement (22 - 22") du logement pour échantillon (20 - 20") un troisième angle (γ) dans la plage de 1° à 30°, de manière préférée de 1° à 3°, est de manière particulièrement préférée sensiblement de 1°.

4. Dispositif selon l'une quelconque des revendications précédentes, comprenant en outre un miroir (30 - 30"), qui présente une distance définie par rapport à la face de logement pour échantillon (22 - 22") et sur lequel une lumière parvenant à travers le logement pour échantillon (20 - 20") est réfléchie.

5. Dispositif selon la revendication 4, **caractérisé en ce qu'**une différence entre un quatrième angle de la normale du miroir (30 - 30") et un troisième angle de l'axe optique (A) de la tête de mesure (10 - 10"), mesurés respectivement par rapport à une normale de la face de logement (22 - 22"), se situe dans la plage de 2° à 30°, de manière préférée de 2° à 4°, et est de manière préférée sensiblement de 2°.

6. Dispositif selon la revendication 4 ou la revendication 5, **caractérisé en ce que** le miroir présente une face inclinée pointant vers la tête de mesure (10 - 10 ").

7. Dispositif selon l'une quelconque des revendications précédentes, **caractérisé en ce que** la tête de mesure (10 - 10") est disposée, observée dans une direction verticale, sous le logement (20 - 20").

8. Dispositif selon l'une quelconque des revendications précédentes, **caractérisé en ce qu'**une fibre d'excitation (11 - 11") et une fibre de détection (12 - 12") sont accouplées sur la tête de mesure (10 - 10"), dans lequel de la lumière d'excitation est amenée par les fibres d'excitation (11 - 11"), laquelle parvient à la fibre de détection après l'irradiation du logement pour échantillon (20 - 20").

9. Dispositif selon l'une quelconque des revendications précédentes, **caractérisé en ce que** la tête de mesure (10 - 10") présente une lentille (13 - 13").

10. Dispositif selon l'une quelconque des revendications précédentes, comprenant en outre un spectromètre, en particulier un spectromètre à fluorescence ou un spectromètre à luminescence.

11. Dispositif selon l'une quelconque des revendications précédentes, comprenant plusieurs logements pour échantillon avec une face de logement pour échantillon destinée à loger un échantillon en particulier liquide, ainsi qu'une ou plusieurs têtes de mesure mobiles destinées à émettre de la lumière d'excitation en direction de l'échantillon et destinées à recevoir un signal lumineux de l'échantillon.

12. Dispositif selon l'une quelconque des revendications précédentes, comprenant une source de lumière destinée à fournir la lumière d'excitation pour la tête de mesure, dans lequel il est préféré que la source de lumière présente une lampe au xénon, en particulier une lampe à flashs de lumière au xénon.

13. Utilisation d'un dispositif selon l'une quelconque des revendications précédentes pour l'analyse spectroscopique d'un ou de plusieurs échantillons en particulier liquides, qui est prévu/sont prévus sur le logement pour échantillon (20 - 20") ou sur plusieurs logements pour échantillon.
